Europäisches Patentamt

European Patent Office

Office européen des brevets

(11) Numéro de publication : **0 089 863**
**B1**

(12) **FASCICULE DE BREVET EUROPÉEN**

(19)

(45) Date de publication du fascicule du brevet :
28.08.85

(21) Numéro de dépôt : **83400409.5**

(22) Date de dépôt : **01.03.83**

(51) Int. Cl.⁴ : **H 01 H 15/10, H 01 H 13/62,
F 16 P  7/00, H 01 H 27/00**

(54) **Dispositif d'arrêt d'urgence.**

(30) Priorité : **19.03.82 FR 8204682**

(43) Date de publication de la demande :
**28.09.83 Bulletin 83/39**

(45) Mention de la délivrance du brevet :
**28.08.85 Bulletin 85/35**

(84) Etats contractants désignés :
**AT CH DE GB IT LI SE**

(56) Documents cités :
**CH-A-   135 326**
**CH-A-   393 485**
**DE-A- 2 551 873**
**FR-A- 1 232 537**
**FR-A- 2 119 545**

(73) Titulaire : **LA TELEMECANIQUE ELECTRIQUE**
**33 bis, avenue du Maréchal Joffre**
**F-92000 Nanterre (FR)**

(72) Inventeur : **Pinel, Claude**
**Dirac**
**F-16410 Dignac (FR)**

(74) Mandataire : **Marquer, Francis**
**CABINET MOUTARD 35, avenue Victor-Hugo Résidence Champfleury**
**F-78180 Voisins le Bretonneux (FR)**

## Description

L'invention se rapporte à un dispositif d'arrêt d'urgence comprenant : d'une part, un organe de commande, mobile axialement entre une position inactive qui lui est donnée par un ressort de rappel et une position active où il est retenu par un verrou et où il ouvre un interrupteur de sécurité et, d'autre part, un tiroir de réarmement, mobile perpendiculairement à l'axe de mouvement dudit organe de commande et associé à une came d'une serrure tournante, d'axe parallèle à celui de l'organe de commande, de façon à transmettre au verrou, lors de la rotation de la came, un déplacement de réarmement qui libère l'organe de commande.

De tels dispositifs sont largement utilisés dans des circuits de protection associés à des machines ou à des installations, où les interrupteurs de sécurité sont montés en série.

Dans un dispositif d'arrêt connu, (FR-A-1 232 537) dont la constitution répond à celle mentionnée ci-dessus, il est possible de produire l'ouverture de l'interrupteur avant que le verrou soit apte à maintenir l'organe de commande. Par conséquent, si une personne mal intentionnée effectue un déplacement progressif et lent de l'organe de commande, le circuit de sécurité s'ouvre sans que le dispositif concerné garde la trace de l'action qu'il a reçu. Il est donc nécessaire que l'ensemble des dispositifs fasse l'objet d'un contrôle pour rétablir en temps utile la continuité du circuit. Un tel inconvénient peut entraîner une perte de temps et de production importante.

On peut encore reprocher à ce dispositif connu le volume important qu'il occupe inutilement en raison du fait que le volume de la serrure, qui est placée à côté de l'interrupteur, est moindre que le volume de celui-ci.

L'invention se propose par suite de porter remède aux inconvénients mentionnés ci-dessus en rendant le dispositif non susceptible de fraude, tout en lui conférant un encombrement moindre que celui de l'art antérieur et en augmentant la fiabilité du circuit dans lequel il est monté.

Selon l'invention, ce résultat est obtenu grâce au fait que l'organe de commande est associé à un plongeur qui maintient, en position inactive, le tiroir dans une position de repos où un ressort d'ouverture qui lui est associé se trouve armé, et qui libère le tiroir lorsqu'il atteint sa position active, ledit tiroir se déplaçant alors brusquement vers une position de travail où, d'une part, il opère l'ouverture d'un interrupteur de sécurité principal et où, d'autre part, il maintient le plongeur en position active, ledit plongeur présentant, pour cette position active, une surface placée au voisinage du poussoir d'un interrupteur de sécurité auxiliaire placé en série avec l'interrupteur principal et de façon telle qu'un déplacement supplémentaire de l'organe de commande, amenant le plongeur dans une position extrême, opère l'ouverture forcée de l'interrupteur auxiliaire.

L'invention sera mieux comprise à la lecture de la description ci-après.

Au dessin annexé :

La figure 1 représente, en élévation, une coupe longitudinale du dispositif par le plan PP' ;

La figure 2 montre en vue de dessus une coupe longitudinale du dispositif par le plan QQ' ;

La figure 3 représente, vue de côté, une coupe transversale partielle du dispositif par le plan SS' ; et

La figure 4 illustre en élévation un détail de la figure 1.

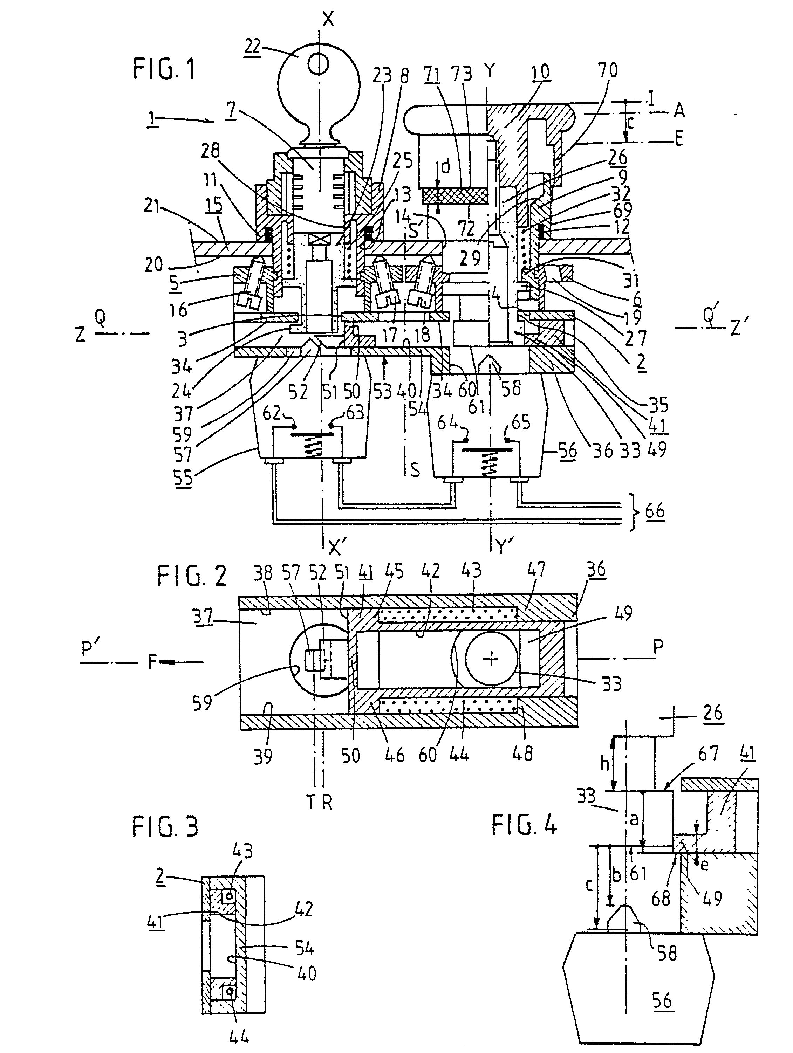

Le dispositif d'arrêt d'urgence 1 visible à la figure 1, comporte une plaque rectangulaire 2 percée de deux ouvertures 3 et 4, d'axes parallèles XX' et respectivement YY' ; coaxialement à ces ouvertures sont fixés sur cette plaque deux supports 5 et 6, dont le premier reçoit une serrure tournante 7 qui est logée dans un alésage 28 d'un premier corps cylindrique à solidaire de ce support, tandis que le second reçoit un bouton poussoir, ou organe de commande 10, qui est logé dans un alésage 29 d'un second corps cylindrique 9. Ces deux corps cylindriques présentent chacun un épaulement 11, respectivement 12 et sont fixés de façon amovible dans le support correspondant pour permettre leur introduction, à travers deux ouvertures de fixation 13 et 14 appartenant à une platine ou à une paroi de coffret 15 ; des vis, telles que 16, 17, 18, engagées dans des trous filetés tels que 19, permettent d'exercer sur la face arrière 20 de cette paroi une pression qui applique les épaulements contre la face avant 21 de celle-ci.

La serrure tournante 7, qui peut être actionnée à l'aide d'une clé 22, est associée à une pièce de révolution 23 traversant l'ouverture 3, portant une came 24, et coopérant avec un ressort de torsion 25 apte à lui donner une position angulaire neutre.

Le bouton poussoir 9 est solidaire d'un plongeur cylindrique axial 26, dont une portée annulaire 27 coopère avec une butée 31 du corps, sous l'effet d'un ressort de rappel 32 placé dans l'alésage 29, pour donner à ce bouton poussoir une position inactive 1 ; ce plongeur, qui traverse l'ouverture 4, présente, d'une part, une extrémité cylindrique 33 placée, comme la came 24, au voisinage d'une face 34 de la plaque opposée aux supports 5, 6 et, d'autre part, une gorge annulaire 35 qui est placée sensiblement dans le plan de cette plaque, voir aussi la figure 4.

Sur cette face 34 de la plaque 2 est fixé un couvercle 36 comportant un couloir 37, voir aussi la figure 2, dont deux parois parallèles 38, 39 sont placées de part et d'autre d'un plan PP' passant par les axes XX' et YY'.

Dans ce couloir et entre une face interne 40 de celui-ci parallèle à la face 34 de la plaque 2, est placé un tiroir 41 coulissant le long d'un axe ZZ'

et comportant une ouverture longitudinale 42 dans laquelle se trouve l'extrémité 33 du plongeur 26. Un ou plusieurs ressorts d'armement, tels que 43 et 44, voir figure 2, exercent, sur deux ailes latérales 45 et 46 du tiroir, une force dirigée dans le sens F, en s'appuyant sur deux bords 47, 48 du couvercle 36, voir aussi la figure 3, et de façon telle qu'une nervure transversale 49 de ce tiroir, qui limite l'ouverture 42 à une extrémité 33 s'appuie élastiquement contre l'extrémité ; cette nervure possède une épaisseur « e » inférieure à la largeur « h » de la gorge 35, voir aussi la figure 4.

A une extrémité 50 du tiroir, opposée à la nervure 49 et placée au voisinage de la came 24, sont disposées, d'une part, une surface de réarmement 51 sensiblement transversale par rapport à l'axe ZZ' et, d'autre part, une rampe 52 inclinée par rapport à la face 34.

Une surface externe 53 du couvercle 36, placée sur une paroi 54 de celui-ci et opposée à la face interne 40, reçoit deux interrupteurs 55 et 56 à ouverture, dont les poussoirs 57, respectivement 58, traversent des ouvertures 59, respectivement 60, de la paroi, qui sont placées coaxialement à XX', respectivement YY' ; l'ouverture 60 possède des dimensions supérieures à celles de l'extrémité 33.

Le poussoir 57 de l'interrupteur pénètre dans le couloir 37 et se trouve placé en regard axial et au voisinage de la rampe inclinée 52, tandis que le poussoir 58 se trouve placé en regard d'une surface d'actionnement transversale 61 appartenant à l'extrémité 33.

Les contacts 62, 63 et 64, 65 des interrupteurs sont montés en série dans un circuit de sécurité 66, de sorte que l'ouverture de l'un des deux interrupteurs en provoque l'interruption ; lorsque plusieurs dispositifs, tels que 2, sont utilisés dans un circuit de sécurité plus étendu, toutes les paires d'interrupteurs tels que 55, 56 sont montés en série.

Dans l'état passif du dispositif représenté aux figures 1 et 4, les interrupteurs sont fermés et une distance « a » sépare une paroi transversale 67 appartenant à la gorge 35 d'une paroi transversale 68 appartenant à la nervure 49, tandis qu'une distance « b » supérieure à « a » sépare le poussoir 58 de la surface d'actionnement 61.

Le bouton poussoir 10 et, par suite, le plongeur 26 peuvent toutefois effectuer, à partir d'une position inactive I visible à la figure 1, une course « c » supérieure à « b » pour atteindre une position extrême E.

Enfin, une surface extérieure cylindrique 69 du corps 9 est entourée par une jupe 70 du bouton poussoir 10, et porte un anneau de couleur 71 dont la limite transversale 72, dirigée vers le tiroir, est séparée par une distance « d » voisine de « a » du bord transversal 73 de cette jupe.

Le dispositif fonctionne de la façon suivante : lors d'un actionnement normal, le poussoir 10 est enfoncé d'une distance au moins égale à « b » ; lorsque, à partir de la position inactive I, une course « a » a été parcourue, le tiroir 41 quitte sa position de repos R et se déplace brusquement vers la gauche de la figure 1 pour atteindre, lorsque la rainure 49 pénètre dans la gorge 35 et bute contre le fond de celle-ci, une position de travail T où la rampe 52 actionne le poussoir 57 et ouvre l'interrupteur principal 55 ; le plongeur 26, et, par conséquent, le poussoir 10, ne peuvent retourner en arrière en raison de l'appui des surfaces 67 et 68 et sont donc verrouillées en position active A par le tiroir ; l'anneau de couleur 71 n'est alors plus visible et permet donc de savoir quel dispositif a été actionné ; un réarmement est opéré à l'aide de la clé 22 qui, une fois introduite dans la serrure 7, permet de communiquer à celle-ci une rotation telle que la came 24 repousse vers la droite la face de réarmement 51, que la nervure 49 quitte la gorge 35 à l'occasion de ce déplacement de réarmement et que le ressort de rappel 32 communique au poussoir et au plongeur une position inactive I.

Si, pour une raison quelconque, l'interrupteur principal 55 ne s'était pas ouvert, une course « c » supérieure à « b » communiquée au bouton poussoir aurait amené celui-ci en position extrême E et provoqué l'actionnement du poussoir 58 de l'interrupteur auxiliaire 56, par la surface 61, pour provoquer une ouverture forcée des contacts 64, 65 correspondants et, par conséquent, du circuit, la largeur « h » de la gorge étant choisie pour permettre ce déplacement supplémentaire « c-b ».

Si une personne mal intentionnée tente de provoquer, par un enfoncement progressif du bouton poussoir, une ouverture de l'interrupteur sans que s'effectue le maintien du bouton poussoir en position active, le fonctionnement est exactement le même et une telle tentative ne peut être couronnée de succès en raison du fait que le verrouillage de ce bouton poussoir par le tiroir se produit obligatoirement avant l'actionnement de l'interrupteur principal.

## Revendications

1. Dispositif d'arrêt d'urgence comprenant, d'une part, un organe de commande, (10) mobile axialement entre une position inactive qui lui est donnée par un ressort de rappel (32) et une position active où il est retenu par un verrou et où il ouvre un interrupteur de sécurité et, d'autre part, un tiroir de réarmement (41), mobile perpendiculairement à l'axe (YY') de mouvement dudit organe de commande et associé à une came (24) d'une serrure tournante (7), d'axe parallèle à celui de l'organe de commande (10), de façon à transmettre au verrou, lors de la rotation de la came (24), un déplacement de réarmement qui libère l'organe de commande (10), caractérisé en ce que l'organe de commande (10) est associé à un plongeur (26) qui maintient, en position inactive (I), le tiroir (41) dans une position de repos (R) où un ressort d'ouverture (43, 44) qui lui est associé se trouve armé, et qui libère le tiroir lorsqu'il atteint sa position active (A), ledit tiroir se déplaçant brusquement vers une position de travail (T) où, d'une part, il opère l'ouverture d'un interrupteur de sécurité principal (55) et où, d'autre part, il maintient le plongeur en position active (A), ledit plongeur présentant, pour cette position active, une surface (61) placée au voisinage du poussoir (58) d'un interrupteur de sécurité auxiliaire (56) placé en série avec l'interrupteur principal et de façon telle qu'un déplacement supplémentaire de l'organe de commande, amenant le plongeur dans une position extrême (E), opère l'ouverture forcée dudit interrupteur auxiliaire.

2. Dispositif d'arrêt d'urgence selon la revendication 1, caractérisé en ce que les interrupteurs (55, 56) sont placés sensiblement dans les axes (XX' et YY') de la serrure (7) et, respectivement, de l'organe de commande (10).

3. Dispositif d'arrêt selon l'une des revendications 1 ou 2, caractérisé en ce qu'un corps cylindrique extérieur (9), dans lequel se déplace l'organe de commande (10), présente, sur sa surface extérieure (69), un anneau coloré (71) visible lorsque ledit organe est en position inactive I, et masqué par une jupe (70) dudit organe lorsque celui-ci se trouve en position active (A).

**Claims**

1. Device for an emergency stop comprising, on the one hand, a control member (10) axially movable between an inactive position which is given thereto by a return spring (32) and an active position in which it is held by a lock device and in which it opens a safety switch, and, on the other hand, a reset drawer (41) movable perpendicularly to the axis (YY') of movement of the said control member and associated to a cam (24) of a revolving lock (7) whose axis is parallel to the axis of the control member (10) so as to transmit to the lock, when the cam (24) is rotating, a reset movement which releases the control member (10), characterized in that the control member (10) is associated to a plunger (26) which, in its inactive position (I), maintains the drawer (41) in a rest position (R) in which an opening spring (43, 44), associated thereto, is set and which releases the drawer when it reaches its active position (A), said drawer moving abruptly to a working position (T) in which, on the one hand, it opens a main safety switch (55) and in which, on the other hand, it maintains the plunger in an active position (A), said plunger having, in this active position, a surface (61) placed in the vicinity of the pusher (58) of an auxiliary safety switch (56) placed in series with the main switch and in such a manner that a further movement of the control member, placing the plunger in an extreme position (E) effects a forced opening of the said auxiliary switch.

2. Device for an emergency stop according to claim 1, wherein the switches (55, 56) are placed substantially along the axes (XX',YY') of the lock (7) and respectively the control member (10).

3. Stop device according to one of claims 1 or 2, wherein an outer cylindrical body (9) in which moves the control member (10) has, on its outer surface (69) a coloured ring (71) visible when the said member is in its inactive position (I) and hidden by a skirt (70) of said member when said member is in its active position (A).

**Patentansprüche**

1. Notstopeinrichtung mit, einerseits, einem Steuerorgan (10), das axial beweglich ist zwischen einer nicht aktiven, von einer Rückstellfeder (22) gegebenen, Stellung und einer aktiven Stellung, in der es von einer Verriegelungsvorrichtung festgehalten wird und in der es einen Sicherheitsschalter öffnet und, andererseits, einem Rückstellschieber (41), der senkrecht zur Bewegungsachse (YY') des besagten Steuerorgans beweglich ist und mit der Nocke (24) eines Drehschlosses (7) assoziiert ist, dessen Achse parallel zur Achse des Steuerorgans (10) ist, um, wenn die Nocke rotiert, der Verriegelungsvorrichtung eine Rückstellbewegung zu übermitteln, welche das Steuerorgan (10) freisetzt, dadurch gekennzeichnet, dass das Steuerorgan (10) mit einem Plunger (26) assoziiert ist, welcher, in der nicht aktiven Stellung (I), den Schieber (41) in Ruhestellung (R) festhält, in der eine assoziierte Öffnungsfeder (43, 44) gespannt wird und der den Schieber freisetzt, wenn er seine aktive Stellung (A) erreicht, wobei besagter Schieber sich schlagartig in eine Arbeitsstellung (T) bewegt, in der er, einerseits, einen Sicherheitshauptschalter (55) öffnet und, andererseits, den Plunger in der aktiven Stellung (A) hält, wobei, in dieser aktiven Stellung, eine Fläche (61) besagten Plungers sich in der Nähe des Drückers (58) eines Sicherheitshilfschalters (56) befindet, der in Reihe mit dem Hauptschalter und so geschaltet ist, dass eine weitere Bewegung des Steuerorgans, welche den Plunger in eine extreme Stellung (E) bringt, die Zwangsöffnung besagten Hilfsschalters bewirkt.

2. Notstopeinrichtung nach Anspruch 1, dadurch gekennzeichnet, dass die Schalter (55, 56) sich im wesentlichen in den Achsen (XX' und YY') des Schlosses (7), bzw. des Steuerorgans (10) befinden.

3. Stopvorrichtung nach einem der Ansprüche 1 oder 2, dadurch gekennzeichnet, dass ein äusserer zylindrischer Körper (9), in dem sich das Steuerorgan bewegt, auf seiner äusseren Oberfläche einen farbigen Ring (71) besitzt, der sichtbar ist, wenn besagtes Organ sich in der nicht aktiven Stellung (I) befindet und von einem Mantel (70) besagten Organs bedeckt wird, wenn dieses sich in der aktiven Stellung befindet.

FIG. 1

FIG. 2

FIG. 3

FIG. 4